# EUROPEAN PATENT APPLICATION

(11) **EP 4 761 160 A1**
(43) Date of publication of application: **17.06.2026**
(21) Application number: 23948124.5
(22) Date of filing: 10.08.2023
(51) Int. Cl.: H04L 5/00

(54) **UPLINK TRANSMISSION SENDING METHOD AND APPARATUS**

(71) Applicant: 1FINITY Inc., Kawasaki-shi, Kanagawa 211-8588 (JP)
(72) Inventor: JIA, Meiyi, Beijing 100022 (CN); ZHANG, Lei, Beijing 100022 (CN); WANG, Xin, Beijing 100022 (CN)
(74) Representative: Haseltine Lake Kempner LLP
(86) International application number: PCT/CN2023/112395
(87) International publication number: WO 2025/030554

(57) **Abstract**

Embodiments of the present disclosure provide a method and an apparatus for transmitting uplink transmission, the method including: a terminal equipment receives a first MAC CE (media access control control element) including candidate configuration information, transmitted by a first DU (distributed unit); and the terminal equipment transmits uplink transmission to a cell associated with the candidate configuration information by using an available CG occasion (configured grant occasion) or using a DG (dynamic grant). According to the embodiments of the present disclosure, the terminal equipment is capable of transmitting uplink transmission by using an appropriate uplink grant, thereby ensuring successful completion of LTM cell switch and improving network performance.

## Description

### TECHNICAL FIELD

Embodiments of the present disclosure relate to the technical field of communications.

### BACKGROUND

A PUSCH (Physical Uplink Shared Channel) may be scheduled by DCI (Downlink Control Information) on a PDCCH (Physical Downlink Control Channel), and a network device uses an uplink grant on the DCI to schedule initial transmission of each uplink transmission. Alternatively, the PUSCH may provide a configured grant (CG) via RRC (Radio Resource Control). Currently, the following two operations are supported:
Type-2 (Type 2): a first PUSCH is triggered by the DCI, and subsequent transmissions of PUSCH follow an RRC configuration and the scheduling received from the DCI;
Type-1 (Type 1): the PUSCH is triggered by arrival of cached data transmitted by a terminal equipment, transmissions of the PUSCH follow the RRC configuration.

For an operation of shared spectrum channel access, the terminal equipment may perform retransmission on the CG. To handle possible LBT (listen before talk) failures on the CG, a CG retransmission timer may be configured to ensure automatic retransmission. When the CG retransmission timer is configured, the terminal equipment will select an HARQ (Hybrid Automatic Repeat-reQuest) process for each CG resource by itself.

For cell-level scheduling, a CS-RNTI (Configured Scheduling RNTI) is a unique terminal equipment identifier for downlink SPS (Semi-Persistent Scheduling) and an uplink CG.

For a BWP (Bandwidth Part) of a serving cell, the terminal equipment may be configured with up to 12 activated CGs. When multiple CGs are configured, a network side decides which (including all) CGs to be activated at one time. For Type-2, each CG is activated separately using a DCI command, and one piece of DCI may be used to activate one or more CGs.

When an SUL (Supplementary Uplink) is configured, the network side needs to ensure that an activated CG on the SUL does not overlap temporally with another activated CG on another UL configuration.

For a dynamic grant (DG) and CG Type-2, the number of repetitions may further be dynamically indicated in L1 signaling. If the number of repetitions also exists in the RRC, the number of dynamically indicated repetitions overrides the number of repetitions configured in the RRC.

In order to improve uplink overriding of NR (New Radio), PUSCH transmissions of the dynamic grant and of the configured grant both support multi-slot aggregation enhancement of a TB (Transport Block) repetition.

It should be noted that the above introduction to the technical background is just to facilitate a clear and complete description of the technical solutions of the present disclosure, and is elaborated to facilitate understanding of persons skilled in the art. It cannot be considered that these technical solutions are known by persons skilled in the art just because these solutions are elaborated in the Background of the present disclosure.

### SUMMARY

The inventor finds that during an L1/ L2-triggered mobility (LTM) procedure, when the network device transmits an MAC CE that triggers cell switch, the terminal equipment switches to a target cell according to an indicated candidate configuration index and applies a corresponding configuration. Moreover, when the terminal equipment transmits a first uplink transmission in the target cell, such as an RRC reconfiguration completion message, if a random access procedure is not executed, it is considered that LTM execution is completed when the terminal equipment determines that the network side has successfully received its first uplink transmission.

According to the current discussion, the dynamic grant or configured grant may be used for the first uplink transmission of the terminal equipment in the target cell during the LTM procedure. In the case of the dynamic grant, it is assumed that a source DU (Distributed Unit) informs a target DU of a selected beam, so that the target DU starts to dynamically schedule a UL grant; and in the case of the configured grant, the terminal equipment selects an occasion of the configured grant associated with a beam indicated in an LTM MAC CE.

However, the configured grant includes one or more groups of uplink grants. The terminal equipment needs to determine an uplink grant that may be used for a first uplink transmission of a terminal in the target cell during the LTM procedure. For this problem, there is no solution at present.

For at least one of the above problems or other similar problems, the embodiments of the present disclosure provide a method and an apparatus for transmitting uplink transmission, so that the terminal equipment is capable of using appropriate grants to perform uplink transmission, thereby ensuring successful completion of LTM cell switch.

According to an aspect of the embodiments of the present disclosure, an apparatus for transmitting uplink transmission is provided, configured in a terminal equipment, wherein the apparatus comprises:
a receiving unit configured to receive an MAC CE (media access control control element) including candidate configuration information, transmitted by a first DU (distributed unit); and
a transmitting unit configured to transmit uplink transmission to a cell associated with the candidate configuration information by using an available CG occasion (configured grant occasion) or using a DG (dynamic grant).

According to another aspect of the embodiments of the present disclosure, an apparatus for receiving uplink transmission is provided, configured in a network device, wherein the apparatus comprises:
a transmitting unit configured to transmit a first MAC CE (media access control control element) including candidate configuration information to a terminal equipment, in a source DU; and
a receiving unit configured to receive uplink transmission transmitted by the terminal equipment to a cell associated with the candidate configuration information by using an available CG occasion (configured grant occasion) or using a DG (dynamic grant), in a candidate or target DU.

One of advantageous effects of the embodiments of the present disclosure lies in that: according to the embodiments of the present disclosure, the terminal equipment is capable of transmitting uplink transmission by using an appropriate uplink grant, thereby ensuring successful completion of LTM cell switch and improving network performance.

Referring to the later description and drawings, specific implementations of the present disclosure are disclosed in detail, indicating a mode that the principle of the present disclosure may be adopted. It should be understood that the implementations of the present disclosure are not limited in terms of a scope. Within the scope of the spirit and terms of the attached claims, the implementations of the present disclosure include many changes, modifications and equivalents.

Features that are described and/or shown for one implementation may be used in the same way or in a similar way in one or more other implementations, may be combined with or replace features in the other implementations.

It should be emphasized that the term "comprise/include" when being used herein refers to presence of a feature, a whole piece, a step or a component, but does not exclude presence or addition of one or more other features, whole pieces, steps or components.

### BRIEF DESCRIPTION OF THE DRAWINGS

An element and a feature described in a drawing or an implementation of the embodiments of the present disclosure may be combined with an element and a feature shown in one or more other drawings or implementations. In addition, in the drawings, similar labels represent corresponding components in several drawings and may be used to indicate corresponding components used in more than one implementation.
FIG. 1 is a schematic diagram of an LTM procedure;
FIG. 2 is a schematic diagram of an L1/L2-based inter-cell mobility scenario;
FIG. 3 is a schematic diagram of an intra-gNB-DU L1/L2 triggered mobility (LTM) procedure;
FIG. 4 is a schematic diagram of an inter-gNB-DU L1/L2 triggered mobility (LTM) procedure;
FIG. 5 is a schematic diagram of a method for transmitting uplink transmission in the embodiments of the present disclosure;
FIG. 6 is another schematic diagram of a method for transmitting uplink transmission in the embodiments of the present disclosure;
FIG. 7 is a schematic diagram of a method for receiving uplink transmission in the embodiments of the present disclosure;
FIG. 8 is another schematic diagram of an inter-gNB-DU L1/L2 triggered mobility (LTM) procedure;
FIG. 9 is a further schematic diagram of an inter-gNB-DU L1/L2 triggered mobility (LTM) procedure;
FIG. 10 is a schematic diagram of an apparatus for transmitting uplink transmission in the embodiments of the present disclosure;
FIG. 11 is a schematic diagram of an apparatus for receiving uplink transmission in the embodiments of the present disclosure;
FIG. 12 is a schematic diagram of a communication system in the embodiments of the present disclosure;
FIG. 13 is a schematic diagram of a network device in the embodiments of the present disclosure;
FIG. 14 is a schematic diagram of a terminal equipment in the embodiments of the present disclosure.

### DETAILED DESCRIPTION

Referring to the drawings, through the following Specification, the aforementioned and other features of the present disclosure will become obvious. The Specification and the drawings specifically disclose particular implementations of the present disclosure, showing partial implementations which may adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, the term "a communication network" or "a wireless communication network" may refer to a network that meets any of the following communication standards, such as Long Term Evolution (LTE), LTE-Advanced (LTE-A), Wideband Code Division Multiple Access (WCDMA), High-Speed Packet Access (HSPA) and so on.

And, communication between devices in a communication system can be carried out according to a communication protocol at any stage, for example may include but be not limited to the following communication protocols: 1G (generation), 2G, 2.5G, 2.75G, 3G, 4G, 4.5G, 5G, New Radio (NR) and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: a Base Station (BS), an Access Point (AP), a Transmission Reception Point (TRP), a broadcast transmitter, a Mobile Management Entity (MME), a gateway, a server, a Radio Network Controller (RNC), a Base Station Controller (BSC) and so on.

The base station may include but be not limited to: node B (NodeB or NB), evolution node B (eNodeB or eNB) and a 5G base station (gNB), etc., and may further includes Remote Radio Head (RRH), Remote Radio Unit (RRU), a relay or a low power node (such as femeto, pico, etc.), an Integrated Access and Backhaul (IAB) node or an IAB-DU or IAB-donor. And the term "base station" may include some or all functions of a base station, each base station may provide communication coverage to a specific geographic region. The term "cell" may refer to a base station and/or its coverage area, which depends on the context in which this term is used. In a case where there is no confusion, the terms "cell" and " base station " are interchangeable.

In the embodiments of the present disclosure, the term "User Equipment (UE)" or "Terminal Equipment (TE) or Terminal Device" refers to, for example, a device that accesses a communication network and receives network services through a network device. The terminal equipment can be fixed or mobile, and can also be referred to as Mobile Station (MS), a terminal, Subscriber Station (SS), Access Terminal (AT), IAB-MT (Mobile Terminal), a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

Moreover, the term "a network side" or "a network device side" refers to a side of a network, may be a base station, and may include one or more network devices as described above. The term "a user side" or "a terminal side" or "a terminal equipment side" refers to a side of a user or terminal, may be a UE, and may include one or more terminal equipments as described above. If it is not specifically mentioned herein, "a device" may refer to a network device, or may refer to a terminal equipment.

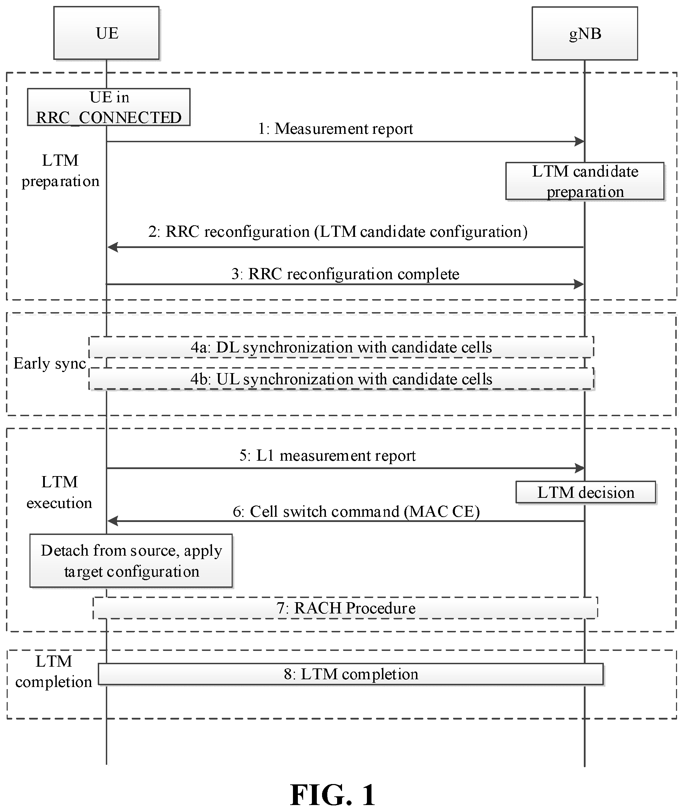

FIG. 1 is a schematic diagram of an LTM procedure. As shown in FIG. 1, the procedure includes the following steps:
1. A UE transmits a *MeasurementReport* message to a gNB, in which a gNB-CU decides to use LTM and initiates candidate cell preparation;
2. The gNB transmits an *RRCReconfiguration* message to the UE, including an LTM candidate cell configuration for one or more candidate cells;
3. The UE stores the LTM candidate cell configuration and transmits an *RRCReconfigurationComplete* message to the gNB;
4a/4b. Before receiving a cell switch command, the UE may perform DL (downlink, simply referred to as DL) synchronization and TA (Timing Advance) acquisition for candidate cell(s);
5. The UE performs L1 measurement on a configured candidate cell and transmits a lower-layer measurement report to the gNB;
   Note: a sequence of DL/UL (uplink, simply referred to as UL) synchronization and L1 measurement has not been defined yet and may be altered.
6. The gNB decides to perform cell switch to a target cell and transmits a MAC CE (MAC Control Element) to trigger a cell switch LTM command by including a candidate configuration index of the target cell. The UE switches to the configuration of the target cell;
7. If the cell switch needs to include executing a random access procedure, the UE performs the random access procedure to the target cell;
8. The UE indicates the cell switch completion to the target cell.

In the above procedure, the UE may perform steps 4 to 8 multiple times for subsequent LTM cell switch based on the configuration provided in step 2.

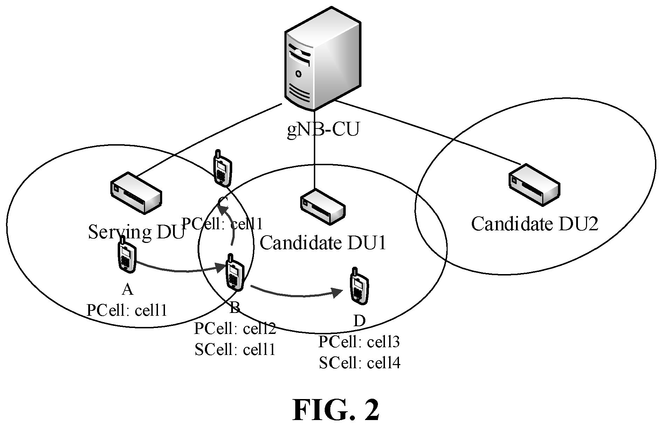

FIG. 2 is a schematic diagram of an L1/L2-based inter-cell mobility scenario in the embodiments of the present disclosure.

As shown in FIG.2, in the embodiments of the present disclosure, when a terminal moves from a coverage area of a cell to a coverage area of another cell, at a point, an L1/L2-triggered serving cell change needs to be performed. According to discussions, scenarios supported by the L1/L2-based inter-cell mobility include: an inter-DU scenario, an intra-DU scenario, a switch scenario, a CA scenario, a NR-DC scenario, and an inter-frequency scenario, etc.

In the inter-DU scenario and the intra-DU scenario, the design of L1/L2-based mobility for an intra-DU and an inter-DU should share as much commonality as possible under reasonable circumstances.

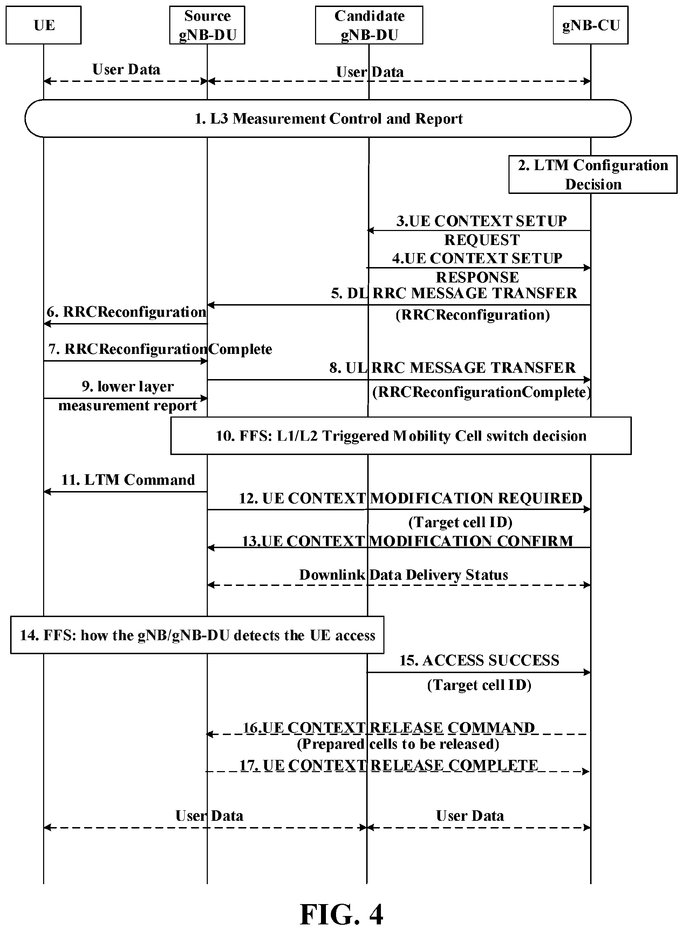

In the switch scenario, switch refers to mobility/change of a PCell, involving both a non-CA scenario (i.e., PCell only) and a CA scenario (i.e., PCell and SCell(s)), including:
a target PCell/target SCell(s) is/are not a current serving cell (i.e., a CA→CA scenario with PCell change), such as LTM from B to D in the scenario shown in FIG. 2;
the target PCell is a current SCell, such as LTM from B to C in the scenario shown in FIG. 4; and
the target SCell is a current PCell, such as LTM from A to B in the scenario shown in FIG. 4.

In the CA scenario, a PCell change without a SCell change and a PCell change with a SCell change are supported.

In the NR-DC scenario, a PSCell change (i.e., intra-SN) without involving a MN is supported.

In the inter-frequency scenario, the inter-frequency scenario includes mobility to an inter-frequency cell that is not a current serving cell, and if feasible, supports inter-frequency L1 measurement.

In the above scenarios, a source cell and a target cell may be synchronous or asynchronous, and may operate on FR1 or FR2.

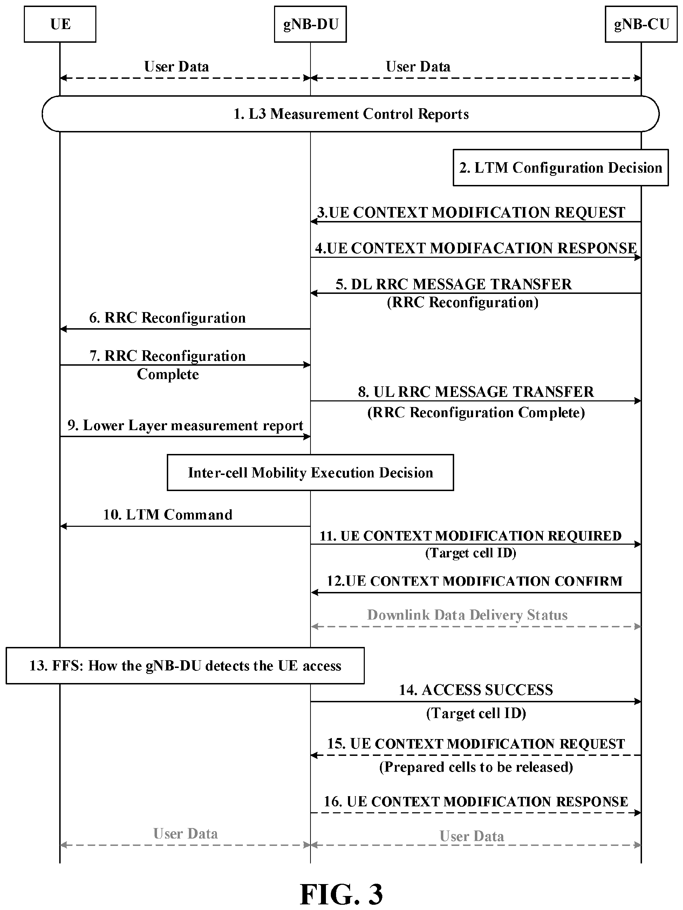

FIG. 3 is a schematic diagram of an intra-gNB-DU (intra-DU) L1/L2 triggered mobility (LTM) procedure, showing movement of a UE in the same gNB-DU within the same gNB-CU. As shown in FIG. 3, when the terminal moves in the same gNB-DU, the procedure includes:
1. A UE transmits a *MeasurementReport* message including neighboring cell measurement to a gNB-DU. The gNB-DU transmits a UL RRC MESSAGE TRANSFER message carrying the received *MeasurementReport* message to a gNB-CU;
2. The gNB-CU decides to initiate a L1/L2-triggered mobility configuration;
3. The gNB-CU transmits a UE CONTEXT MODIFICATION REQUEST message to the gNB-DU, including a target candidate cell;
4. If the gNB-DU accepts a request for the LTM configuration, the gNB-DU responds the UE CONTEXT MODIFICATION RESPONSE message to the gNB-CU, including a generated lower-layer RRC configuration of an accepted candidate cell;
5. The gNB-CU transmits a DL RRC MESSAGE TRANSFER messages to the gNB-DU, including a generated RRCReconfiguration message carrying the L1/L2-triggered mobility configuration; FFS: is a DL RRC MESSAGE TRANSFER message or a UE CONTEXT MODIFICATION REQUEST message;
6. The gNB-DU transfers the received *RRCReconfiguration* message to the UE;
7. The UE responds an *RRCReconfigurationComplete* message to the gNB-DU;
8. The gNB-DU transfers the *RRCReconfigurationComplete* message to the gNB-CU via an UL RRC MESSAGE TRANSFER message; FFS: is an UL RRC MESSAGE TRANSFER message or a UE CONTEXT MODIFICATION RESPONSE message;
9. The UE transmits a lower layer measurement result to the gNB-DU; and the gNB-DU decides to perform L1/L2 inter-cell mobility;
10. The gNB-DU transmits an LTM command to the UE;
11. The gNB-DU transmits a UE CONTEXT MODIFICATION REQUIRED message to the gNB-CU to indicate initiation of an L1/L2-triggered mobility command that includes a target cell ID and is transmitted to the UE;
12. The gNB-CU responds a UE CONTEXT MODIFICATION CONFIRM message to the gNB-DU;
13. FFS: how the target gNB-DU detects UE access;
14. The gNB-DU transmits an Access Success message, including the target cell ID, to the gNB-CU;
15. The gNB-CU may transmit a UE Context Modification REQUEST message to the gNB-DU to release resources of prepared cells;
16. The gNB-DU responds a UE CONTEXT MODIFICATION RESPONSE message.

FIG. 4 is a schematic diagram of an inter-gNB-DU (inter-DU) L1/L2 triggered mobility (LTM) procedure, showing movement of a UE among different gNB-DUs in a gNB-CU. As shown in FIG. 4, when a terminal moves from one gNB-DU to another gNB-DU in the same gNB-CU, the NR operation process of L1/L2-triggered mobility includes:
1. A UE transmits a *MeasurementReport* message including neighboring cell measurement to a source gNB-DU. The source gNB-DU transmits a UL RRC MESSAGE TRANSFER message carrying the received *MeasurementReport* message to a gNB-CU;
2. The gNB-CU decides to initiate a configuration of L1/L2-triggered mobility;
3. The gNB-CU transmits a UE CONTEXT SETUP REQUEST message to a candidate gNB-DU, including a target candidate cell;
4. If the candidate gNB-DU accepts a request for LTM configuration, the candidate gNB-DU responds an UE CONTEXT SETUP RESPONSE message to the gNB-CU, including a generated lower-layer RRC configuration of an accepted target candidate cell;
5. The gNB-CU transmits a DL RRC MESSAGE TRANSFER (FFS: or a UE CONTEXT MODIFICATION REQUEST) message to the source gNB-DU, including a generated RRCReconfiguration message carrying L1/L2-triggered mobility configuration;
6. The source gNB-DU transfers the received *RRCReconfiguration* message to the UE;
7. The UE responds an *RRCReconfigurationComplete* message to the source gNB-DU;
8. The source gNB-DU transfers the *RRCReconfigurationComplete* message to the gNB-CU via the UL RRC MESSAGE TRANSFER (FFS: or UE CONTEXT MODIFICATION RESPONSE) message;
9. The UE transmits a lower layer measurement result to the source gNB-DU;
10. The source gNB-DU decides to perform the L1/ L2-triggered mobility to a candidate target cell; FFS: also notifies other nodes of the LTM triggering decision.
11. The source gNB-DU transmits an LTM command to the UE (the LTM command is updated according to RAN2 discussions);
12. The source gNB-DU transmits a UE CONTEXT MODIFICATION REQUIRED message to the gNB-CU to indicate initiation of an L1/L2-triggered mobility command that includes a target cell ID and is transmitted to the UE;
13. The gNB-CU responds a UE CONTEXT MODIFICATION CONFIRM message to the source gNB-DU;
14. FFS: how the target gNB-DU detects the UE access, whether there is F1 influence;
15. The target gNB-DU transmits an ACCESS SUCCESS message to the gNB-CU, including the target cell ID;
16. The gNB-CU may transmit a UE CONTEXT RELEASE COMMAND message to the source gNB-DU to release resources of prepared cells;
17. The source gNB-DU responds to a UE CONTEXT RELEASE COMPLETE message.

In the embodiments of the present disclosure, all functions defined for a gNB-DU also apply to IAB-DUs and IAB-donor-DUs, all functions defined for a gNB-CU also apply to IAB-donor-CUs, and all functions defined for a UE also apply to IAB-MTs, unless otherwise specified. In addition, in the following description, without causing confusion, "if...", "in a case where..." and "when..." may be used interchangeably.

Embodiments of the present disclosure are described below in conjunction with the drawings and the specific implementations.

### Embodiments of a first aspect

Embodiments of the present disclosure provide a method for transmitting uplink transmission, which is described from a terminal equipment side.

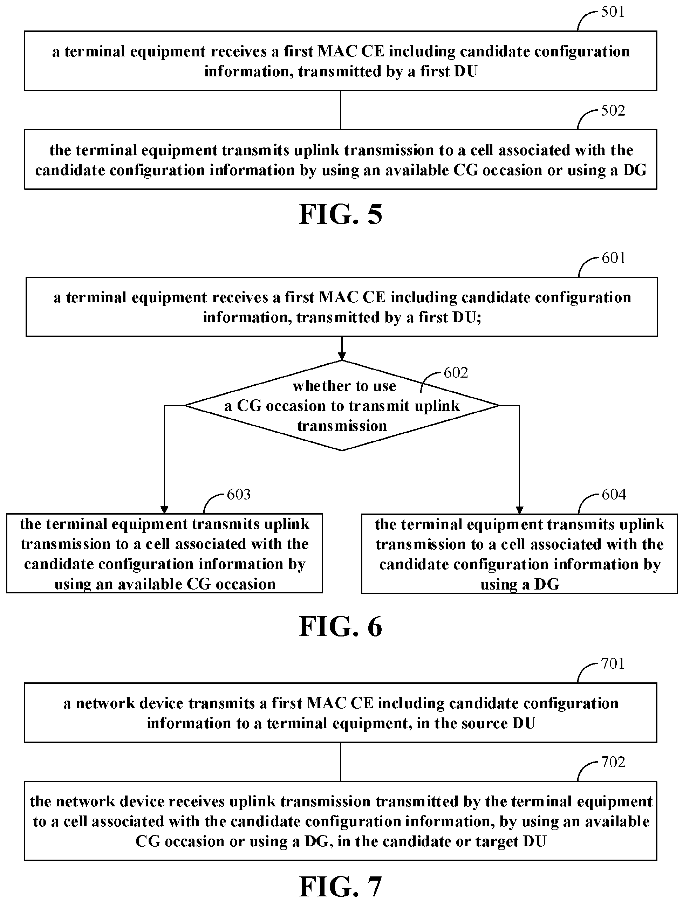

FIG. 5 is a schematic diagram of a method for transmitting uplink transmission in the embodiments of the present disclosure. As shown in FIG. 5, the method comprises:
501: a terminal equipment receives a first MAC CE (media access control control element) including candidate configuration information, transmitted by a first DU (distributed unit); and
502: the terminal equipment transmits uplink transmission to a cell associated with the candidate configuration information by using an available CG occasion (configured grant occasion) or using a DG (dynamic grant).

It should be noted that the above FIG. 5 only schematically describes the embodiments of the present disclosure, but the present disclosure is not limited to this. For example, some other operations can be increased or operations therein may be reduced. Persons skilled in the art may make appropriate modifications according to the above contents, not limited to the records in the above FIG. 5.

In the above embodiment, "the first DU" is, for example, "the gNB-DU" in the scenario shown in FIG. 3 and/or "the source gNB-DU" in the scenario shown in FIG. 4, and is configured to transmit a cell switch command to the terminal equipment. The present disclosure is not limited thereto. After the terminal equipment switches to the target gNB-DU, the target gNB-DU will also perform relevant configurations for the terminal equipment, at this point, "the first DU" may further be "the target gNB-DU" in the scenario shown in FIG. 4. Similarly, when the first DU is the source gNB-DU, the second DU may be the target gNB-DU.

In the above embodiments, after receiving the first MAC CE including candidate configuration information transmitted by the first DU, the terminal equipment may transmit uplink transmission to a cell associated with or corresponding to the candidate configuration information by using an available CG occasion or using a DG (for example in a case where the CG occasion is not available or the DG is available). Thereby, the problem i.e., how the terminal equipment selects resources for performing uplink transmission when a configured grant is of one group or multiple groups, is solved. By selecting resources for performing uplink transmission according to the method in the embodiments of the present disclosure, the network performance is enhanced.

In the above embodiments, the above uplink transmission may be a first one of uplink transmissions of the terminal equipment in the target cell during the LTM procedure, such as an RRC reconfiguration complete message, the present disclosure is not limited thereto.

In some embodiments, the available CG occasion is associated with beam information included in the first MAC CE. The beam information, for example, is unified TCI (Transmission Configuration Indication) state (unified TCI state) information and/or TCI state information and/or uplink spatial filtering information.

The unified TCI state information, for example, is a joint TCI state ID, or an uplink TCI state ID (UL TCI state ID) and/or a downlink TCI state ID (DL TCI state ID) in a separate TCI state ID, and the like.

If the beam information is the unified TCI state information, the terminal equipment may transmit the uplink transmission on a beam corresponding to the joint TCI state ID or UL TCI state ID; or, the terminal equipment may receive information on that the uplink transmission has been successfully received on the beam corresponding to the joint TCI state ID or DL TCI state ID.

If the beam information, for example, is TCI state information and/or uplink spatial filtering information, the terminal equipment may receive the information on that the uplink transmission has been successfully received on the beam, for example, receive the information on that the uplink transmission has been successfully received on the beam corresponding to the TCI state information; or, the terminal equipment may transmit the uplink transmission on the beam associated with the uplink spatial filtering information.

In some other embodiments, the available CG occasion is associated with a specific RO (random access opportunity), the specific RO for example is an RO used by the terminal equipment for random access performed for obtaining early uplink synchronization, i.e., TA (Timing Advance).

In the above embodiments, if the first MAC CE does not include beam information, or the CG occasion associated with the beam information included in the first MAC CE is not configured, or the CG occasion associated with the beam information included in the first MAC CE is invalid, the available CG occasion is associated with the specific RO.

In some other embodiments, the available CG occasion is associated with a specific RS, the specific RS for example is an RS associated with the beam information included in the first MAC CE, or an RS associated with the specific RO, or an SSB (Synchronization Signal/PBCH Block,) for receiving SIB1 (a first system information block), or an RS indicated in SIB1 or MIB (Master Information Block), and so on.

In the above embodiments, the RS may be at least one of an SSB, a CSI-RS (Channel State Information-Reference Signal), and an SRS (Sounding Reference Signal), the present disclosure is not limited thereto.

Each of the above embodiments only exemplarily describes the available CG occasion, but the present disclosure is not limited thereto, appropriate modifications may be further made based on the above each embodiment. For example, each of the above embodiments may be used individually, or one or more of the above embodiments may be combined.

In some embodiments, the terminal equipment considers that the CG occasion is available, or there exists the available CG occasion in a case where at least one of the following conditions is satisfied:
the CG occasion is configured by RRC signaling;
the first MAC CE is received;
specific DCI is received.

For example, when the CG occasion is configured by RRC signaling, the terminal equipment considers that the configured CG occasion is available; for another example, when the first MAC CE is received, the terminal equipment considers that the CG occasion related to the candidate configuration information included in the first MAC CE is available; for a further example, when the specific DCI is received, the terminal equipment considers that the CG occasion pre-configured by RRC is available, and so forth.

In some implementations, the specific DCI is used to schedule a PDSCH carrying the first MAC CE. That is, when the terminal equipment receives the DCI for scheduling the PDSCH carrying the first MAC CE, it considers that the CG occasion pre-configured by RRC is available.

In some implementations, the specific DCI and the first MAC CE are transmitted or received simultaneously. For example, the network side simultaneously transmits the specific DCI and the first MAC CE, or the terminal equipment simultaneously receives the specific DCI and the first MAC CE. Here, "simultaneously transmit or receive" refers to transmitting or receiving in a same time unit, such as same slot or symbol or RB (Resource Block).

In the above embodiments, "available" may further be replaced by similar expressions such as "activated", "valid", or "initialized". In the following description, unless otherwise specified, the above similar expressions may be used to replace "available".

Each of the above embodiments exemplarily describes under what circumstances does the terminal equipment consider that the CG occasion is available, but the present disclosure is not limited thereto, appropriate modifications may be further made based on the above each embodiment. For example, each of the above embodiments may be used individually, or one or more of the above embodiments may be combined.

In some embodiments, the available CG occasion is on an uplink carrier, the uplink carrier here is, for example, at least one of the following:
an NUL (normal uplink) or SUL (supplementary uplink) configured with a CG;
an NUL or SUL configured with a CG used for an LTM procedure;
an NUL or SUL configured with an available CG used for an LTM procedure;
an uplink carrier used by the terminal equipment for random access performed for obtaining a TA (timing advance);
an uplink carrier indicated by the first MAC CE;
an uplink carrier selected based on RSRP (Reference Signal Receiving Power / Reference Signal Received Power) of a downlink path loss reference signal.

For example, if an RSRP threshold is configured and if the RSRP of the downlink path loss reference signal is less than the RSRP threshold, the selected uplink carrier is an SUL; otherwise, that is, if the RSRP threshold is not configured, or the RSRP of the downlink path loss reference signal is greater than or equal to the RSRP threshold, the selected uplink carrier is an NUL.

Each of the above embodiments only exemplarily describes uplink carriers where the available CG occasion is located, but the present disclosure is not limited thereto, appropriate modifications may be further made based on the above each embodiment. For example, each of the above embodiments may be used individually, or one or more of the above embodiments may be combined.

In some embodiments, the uplink transmission carries an RRC reconfiguration complete message, or carries a MAC CE for indicating LTM completion. The present disclosure does not impose any restrictions on the name of the MAC CE for indicating LTM completion, for example, it may be called "an LTM completion MAC CE", etc.

In some embodiments, the uplink transmission may be at least one of initial transmission, repetition of the initial transmission, and retransmission, and may be configured by RRC signaling and/or the first MAC CE and/or the DCI for scheduling PDSCHs carrying the first MAC CE.

In the above embodiments, if the uplink transmission is retransmission, the terminal equipment may introduce a retransmission timer. After the initial transmission is transmitted, the retransmission timer may be started, and the retransmission is transmitted when the retransmission timer expires.

In some embodiments, the terminal equipment may use an HARQ process to transmit the uplink transmission. ID of the HARQ process may be determined using current calculation formula(s) and parameter(s), or by using new calculation formula(s) and parameter(s). For example, for CG type 1, the current calculation formula(s) and parameter(s) may be reused, which are called first calculation formula(s) and first parameter(s). For another example, for CG type 2, the current calculation formula(s) and new parameter(s) may be used, which are called second calculation formula(s) and second parameter(s).

In the above embodiments, for the first calculation formula(s), the second calculation formula(s) and the first parameter(s), relevant technologies may be referred to, and descriptions are omitted here. For the second parameter(s), unlike the current first parameter(s), SFN_{start time}, slot_{start time} and symbol_{start time} in the second parameter(s) may respectively be an SFN (System Frame Number), a slot and a symbol of a first transmission occasion of a PUSCH when or after the CG occasion is available (including activated, valid or initialized, etc.).

In some embodiments, the terminal equipment may further determine whether to use the CG occasion to transmit the uplink transmission. For example, when it is determined to use the CG occasion, the uplink transmission is transmitted using the available CG occasion. The present disclosure does not impose restrictions on a determining method.

FIG. 6 is another schematic diagram of a method for transmitting uplink transmission in the embodiments of the present disclosure, the same content as the embodiment in FIG. 5 is not described repeatedly. As shown in FIG. 6, the method comprises:
601: a terminal equipment receives a first MAC CE including candidate configuration information, transmitted by a first DU; and
602: the terminal equipment determines whether to use a CG occasion to transmit uplink transmission, and when it is determined to use the CG occasion, performs operation 603; otherwise, performs operation 604;
603: the terminal equipment transmits uplink transmission to a cell associated with the candidate configuration information by using an available CG occasion; and
604: the terminal equipment transmits uplink transmission to a cell associated with the candidate configuration information by using a DG.

It should be noted that the above FIG. 6 only schematically describes the embodiments of the present disclosure, but the present disclosure is not limited to this. For example, some other operations can be increased or operations therein may be reduced. Persons skilled in the art may make appropriate modifications according to the above contents, not limited to the records in the above FIG. 6.

In some embodiments, if a condition for using the CG is satisfied or a condition for using the DG is not satisfied, the terminal equipment determines to use the CG occasion to transmit uplink transmission; on the contrary, if the condition for using the DG is satisfied or the condition for using the CG is not satisfied, the terminal equipment determines to use the DG to transmit uplink transmission.

In the above embodiments, the condition for using the CG, for example, includes at least one of the following:
the CG is configured;
a configured CG is valid or available (or activated or initialized, etc.);
a time interval related to reception of the first MAC CE satisfies a first predetermined condition.

For example, if the CG is configured, the terminal equipment determines to use the CG occasion to transmit uplink transmission; for another example, if a configured CG is valid or available, the terminal equipment determines to use the CG occasion to transmit uplink transmission; for a further example, if a time interval related to reception of the first MAC CE satisfies a first predetermined condition, the terminal equipment determines to use the CG occasion to transmit uplink transmission.

In the above embodiments, the first predetermined condition, for example, is that: a time interval between reception of the first MAC CE and a next CG occasion is less than a configured offset; for another example, is that: after reception of the first MAC CE, a PDCCH addressed by a C-RNTI (Cell Radio Network Temporary Identifier) is not received; for a further example, is that: between reception of the first MAC CE and a next CG occasion, a PDCCH addressed by a C-RNTI is not received.

In the above embodiments, the condition for using the DG, for example, includes at least one of the following:
the first DU is a DU associated with the candidate configuration information;
the first DU informs a second DU that a terminal equipment performs LTM;
the first DU informs the second DU of the beam information included in the first MAC CE;
a time interval related to reception of the first MAC CE satisfies a second predetermined condition.

For example, if the first DU is a DU associated with the candidate configuration information, the terminal equipment determines to use the DG to transmit uplink transmission; for another example, if the first DU informs a second DU that a terminal equipment performs LTM, the terminal equipment determines to use the DG to transmit uplink transmission; for another example, if the first DU informs the second DU of the beam information included in the first MAC CE, the terminal equipment determines to use the DG to transmit uplink transmission; for a further example, if a time interval related to reception of the first MAC CE satisfies a second predetermined condition, the terminal equipment determines to use the DG to transmit uplink transmission. When the above conditions are not satisfied, the terminal equipment determines that the conditions for using DG is not satisfied.

In the above embodiments, the second predetermined condition, for example, is that: a time interval between reception of the first MAC CE and a PDCCH addressed by a next C-RNTI is less than a configured offset; for another example, is that: there is no available CG occasion after the reception of the first MAC CE; for a further example, is that: there is no available CG occasion between reception of the first MAC CE and reception of a PDCCH addressed by a next C-RNTI.

Each of the above embodiments only exemplarily describes conditions for using the CG and conditions for using the DG, but the present disclosure is not limited thereto, appropriate modifications may be further made based on the above each embodiment. For example, each of the above embodiments may be used individually, or one or more of the above embodiments may be combined.

In some embodiments, the terminal equipment further receives information on that the uplink transmission has been successfully received. For example, after the terminal equipment transmits the uplink transmission, a target cell feeds back the information on that the uplink transmission has been successfully received.

In the above embodiments, the information may be RLC ACK of the uplink transmission, or a PDCCH addressed by a C-RNTI, or may be a UE Contention Resolution Identity MAC CE, or an MAC CE indicating completion of LTM cell switch. The present application does not make limitations in this regard.

For example, if the CG is used for retransmission (implying that the initial transmission is also transmitted via the CG), the information is a PDCCH addressed by a C-RNTI.

For another example, if the DG is used for initial transmission or retransmission, the information is a PDCCH addressed by a C-RNTI, and the PDCCH schedules a new transmission (for example, a new transmission of another transmission different from the uplink transmission), or the PDCCH schedules a new transmission on the HARQ process ID. That is, if the DG is used for initial transmission or retransmission, and the PDCCH schedules a new transmission or a new transmission on the HARQ process ID, the information is a PDCCH addressed by a C-RNTI.

In the above embodiments, the PDCCH may schedule one of the RLC ACK of the uplink transmission, the UE Contention Resolution Identity MAC CE, and the MAC CE indicating completion of LTM cell switch. Or, in a case where the information is a PDCCH addressed by a C-RNTI, the PDCCH may schedule one of the RLC ACK of the uplink transmission, the UE Contention Resolution Identity MAC CE, and the MAC CE indicating completion of LTM cell switch.

Each of the above embodiments only exemplarily describes the information on that the uplink transmission has been successfully received, but the present disclosure is not limited thereto, appropriate modifications may be further made based on the above each embodiment. For example, each of the above embodiments may be used individually, or one or more of the above embodiments may be combined.

Each of the above embodiments is only exemplary description of the method in the embodiments of the present disclosure, but the present disclosure is not limited to this, appropriate modifications may be further made based on the above each embodiment. For example, each of the above embodiments may be used individually, or one or more of the above embodiments may be combined.

According to the method in the embodiments of the present disclosure, the problem i.e., how the terminal equipment selects resources for performing uplink transmission when a configured grant is of one group or multiple groups, is solved. By selecting resources for performing uplink transmission according to the method in the embodiments of the present disclosure, successful completion of LTM cell switch is ensured, and network performance is enhanced.

### Embodiments of a second aspect

Embodiments of the present disclosure provide a method for receiving uplink transmission, which is described from a network device side. The network device, for example, is a gNB in the scenario shown in FIG. 3, including a gNB-DU and a gNB-CU, wherein the gNB-DU implements the role of the first DU in the embodiments of the first aspect, and for another example is a gNB shown in FIG. 4, including a source gNB-DU, a candidate or target gNB-DU and gNB-CU, wherein the source gNB-DU implements the role of the first DU in the embodiments of the first aspect, and a cell associated with the candidate configuration information in the embodiment of the first aspect is located in the candidate or target gNB-DU. Contents same as the embodiments of the first aspect are not repeated again.

FIG. 7 is a schematic diagram of a method for receiving uplink transmission in the embodiments of the present disclosure. As shown in FIG. 7, the method comprising:
701: a network device transmits a first MAC CE (media access control control element) including candidate configuration information to a terminal equipment, in the source DU; and
702: the network device receives uplink transmission transmitted by the terminal equipment to a cell associated with the candidate configuration information, by using an available CG occasion (configured grant occasion) or using a DG (dynamic grant), in the candidate or target DU.

It should be noted that the above FIG. 7 only schematically describes the embodiments of the present disclosure, but the present disclosure is not limited to this. For example, an execution step of each operation may be adjusted appropriately, and some other operations may further be increased or operations therein may be reduced. Persons skilled in the art may make appropriate modifications according to the above contents, not limited to the records in the above FIG. 7.

In some embodiments, the available CG occasion is associated with at least one of the following:
beam information included in the first MAC CE;
an RO used by the terminal equipment for random access performed for obtaining a TA;
an RS of the beam information included in the first MAC CE;
an RS of the RO;
a specific RS.

In the above embodiments, the beam information may include Unified TCI state information and/or TCI state information and/or uplink spatial filtering information.

The Unified TCI state information includes a joint TCI state ID, or an UL TCI state ID and/or DL TCI state ID in a separate TCI state ID.

In a case where the beam information includes the Unified TCI state information, a candidate or target DU of the network device may receive the uplink transmission transmitted by the terminal equipment on a beam corresponding to the joint TCI state ID or the UL TCI state ID; and/or, the candidate or target DU of the network device transmits the information on that the uplink transmission has been successfully received to the terminal equipment on a beam corresponding to the joint TCI state ID or the DL TCI state ID.

In a case where the beam information includes TCI state information and/or uplink spatial filtering information, the candidate or target DU of the network device may receive the uplink transmission transmitted by the terminal equipment on a beam associated with the uplink spatial filtering information; and/or, the candidate or target DU of the network device may transmit the information on that the uplink transmission has been successfully received to the terminal equipment on the beam corresponding to the TCI state information.

In the above embodiments, that the available CG occasion is associated with an RO used by the terminal equipment for random access performed for obtaining a TA includes:
if the first MAC CE does not include beam information, or the CG occasion associated with the beam information included in the first MAC CE is not configured, or the CG occasion associated with the beam information included in the first MAC CE is invalid, the available CG occasion is associated with the RO.

In the above embodiments, the specific RS may be an SSB for receiving SIB1.

In the above embodiments, the specific RS may be an RS indicated in SIB1 or MIB.

In the above embodiments, the RS includes at least one of the following: an SSB, a CSI-RS, an SRS.

In some embodiments, when at least one of the following conditions is satisfied, the terminal equipment considers that the CG occasion is available or there is the available CG occasion:
the CG occasion is configured by RRC signaling;
the first MAC CE is received;
specific DCI is received.

In some implementations, the specific DCI is used to schedule a PDSCH carrying the first MAC CE.

In some other implementations, the specific DCI is transmitted or received simultaneously with the first MAC CE, being transmitted or received simultaneously means being transmitted or received in the same slot or symbol or RB.

In some embodiments, the available CG occasion is on an uplink carrier, the uplink carrier referring to at least one of the following:
an NUL (normal uplink) or SUL (supplementary uplink) configured with a CG;
an NUL or SUL configured with a CG used for an LTM procedure;
an NUL or SUL configured with an available CG used for an LTM procedure;
an uplink carrier used by the terminal equipment for random access performed for obtaining a TA (timing advance);
an uplink carrier indicated by the first MAC CE;
an uplink carrier selected based on RSRP of a downlink path loss reference signal.

For example, if an RSRP threshold is configured and if the RSRP of the downlink path loss reference signal is less than the RSRP threshold, the selected uplink carrier is an SUL; otherwise, the selected uplink carrier is an NUL.

In some embodiments, the uplink transmission carries an RRC reconfiguration complete message, or carries a MAC CE for indicating LTM completion.

In some embodiments, the uplink transmission is at least one of initial transmission, repetition of the initial transmission, and retransmission, and is configured by RRC signaling and/or the first MAC CE and/or DCI.

In some embodiments, the candidate or target DU of the network device uses an HARQ process to receive the uplink transmission transmitted by the terminal equipment; wherein for CG type 1, a process ID of the HARQ process is calculated using a first calculation formula and a first parameter; for CG type 2, the process ID of the HARQ process is calculated using a second calculation formula and a second parameter; wherein SFNstart time, slotstart time and symbolstart time in the second parameter are respectively an SFN, a slot and a symbol of a first transmission occasion of a PUSCH when or after the CG occasion is available.

In some embodiments, the information on that the uplink transmission has been successfully received may be one of the following:
RLC ACK for the uplink transmission;
a PDCCH addressed by a C-RNTI;
a UE Contention Resolution Identity MAC CE;
an MAC CE indicating completion of LTM cell switch.

For example, if the CG is used for retransmission, the information is a PDCCH addressed by a C-RNTI.

For another example, if the DG is used for the initial transmission or retransmission, the information is a PDCCH addressed by a C-RNTI, and the PDCCH schedules new transmission, or the PDCCH schedules new transmission on an HARQ process ID.

In the above embodiments, the PDCCH may be used to schedule one of the RLC ACK for the uplink transmission; the UE Contention Resolution Identity MAC CE, and the MAC CE indicating completion of LTM cell switch; or, in a case where the information is a PDCCH addressed by a C-RNTI, the PDCCH may be used to schedule one of the RLC ACK for the uplink transmission, the UE Contention Resolution Identity MAC CE, and the MAC CE indicating completion of LTM cell switch.

In some embodiments, the source DU of the network device may further transmit a target cell identifier and beam information to the CU of the network device; the CU of the network device transmits the target cell identifier and the beam information to the candidate or target DU of the network device.

For example, in a case where the CG configuration configured for the terminal equipment does not include a configuration of a cell associated with the candidate configuration information included in the first MAC CE, the source DU of the network device transmits the target cell identifier and the beam information to the CU of the network device; the CU of the network device transmits the target cell identifier and the beam information to the candidate or target DU of the network device.

In the above embodiments, the target cell identifier and the beam information transmitted by the source DU of the network device may be included in a UE CONTEXT MODIFICATION REQUIRED message or in a certain F1 message (called a first F1 message). The first F1 message, for example, is a UE CONTEXT SETUP REQUIRED message, the present disclosure is not limited thereto.

In the above embodiments, the target cell identifier and the beam information transmitted by the CU of the network device may be included in a certain F1 message (called a second F1 message). The second F1 message, for example, is a UE CONTEXT SETUP REQUEST message or a UE CONTEXT MODIFICATION REQUEST message, etc., the present disclosure is not limited thereto.

In the above embodiments, the beam information may include at least one of the following:
unified TCI state information;
TCI state information;
uplink spatial filtering information.

Embodiments of the first aspect may be specifically referred to, the description is omitted here.

In the above embodiments, the target cell identifier may include candidate configuration information, or include candidate configuration information and a cell index under the candidate configuration.

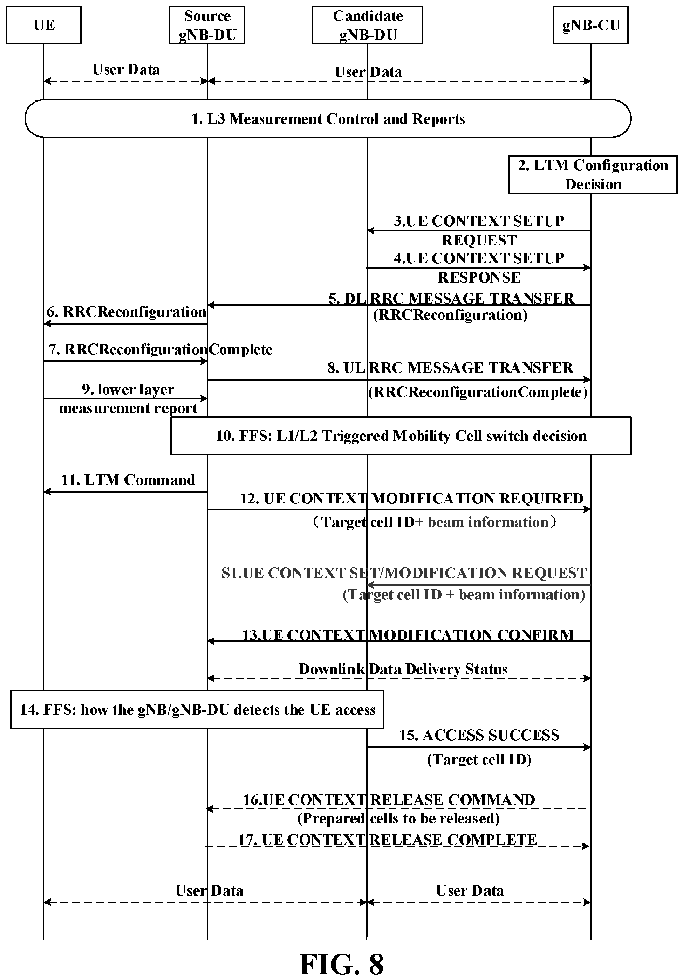

FIG. 8 is another schematic diagram of an inter-gNB-DU L1/L2 triggered mobility (LTM) procedure, showing a situation in which a source DU informs a target DU of a target cell identifier and beam information via a CU. As shown in FIG. 8, different from the procedure shown in FIG. 4, in step 12, in the UE CONTEXT MODIFICATION REQUIRED message, in addition to the target cell identifier, beam information is further included. Furthermore, between steps 12 and 14, a new step is added, numbered S1, the step S1 is used by the gNB-CU to transmit an F1 message to the candidate or target gNB-DU, such as a UE CONTEXT SETUP REQUEST message or a UE CONTEXT MODIFICATION REQUEST message, in which the target cell identifier and the beam information received in step 12 are included.

In the above example, there is no restriction on a position of step S1. For example, it may be before step 13, or may be after step 13, and so on.

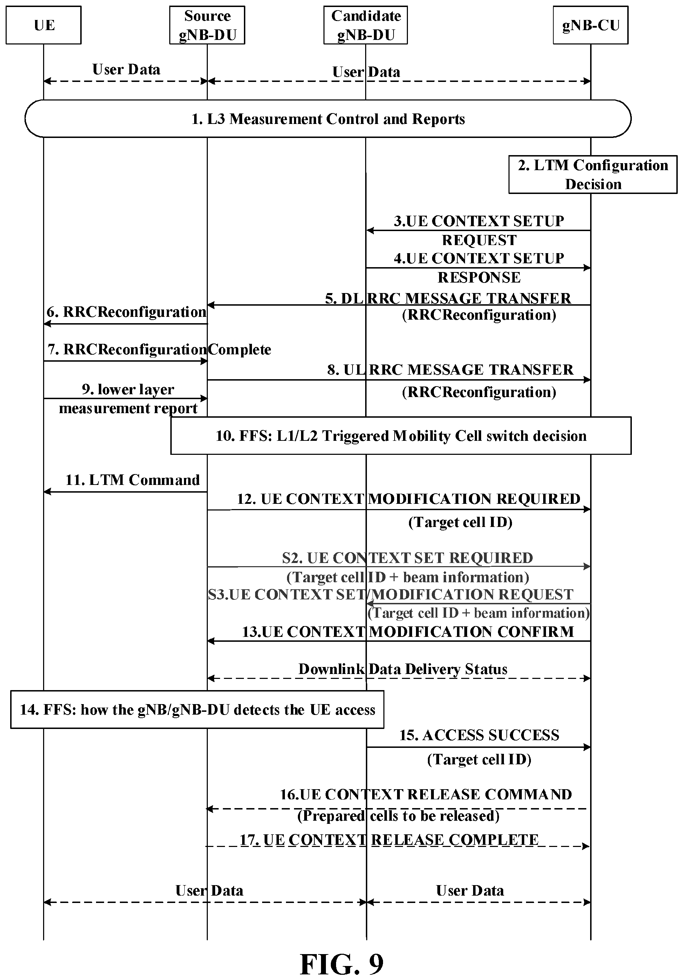

FIG. 9 is a further schematic diagram of an inter-gNB-DU L1/L2 triggered mobility (LTM) procedure, showing a situation in which a source DU informs a target DU of a target cell identifier and beam information via a CU. Different from the example shown in FIG. 8, in the example of FIG. 9, step 12 is not modified. Instead, two new steps, numbered S2 and S3, are added between steps 10 and 13. Step S2 is used for the source gNB-DU to transmit an F1 message to the gNB-CU, such as a UE CONTEXT SETUP REQUIRED message, in which the target cell identifier and the beam information are included, or only the beam information is included; the step S3 is used by the gNB-CU to transmit an F1 message to the candidate or target gNB-DU, such as a UE CONTEXT SETUP REQUEST message or a UE CONTEXT MODIFICATION REQUEST message, in which the target cell identifier and the beam information received in step S2 are included.

In the above example, there is no restriction on positions of step S2 and S3. For example, they may be before or after step 11, or may be before or after step 12, and so on.

Each of the above embodiments exemplarily describes the method in the embodiments of the present disclosure, but the present disclosure is not limited thereto, appropriate modifications may be further made based on the above each embodiment. For example, each of the above embodiments may be used individually, or one or more of the above embodiments may be combined.

According to the method in the embodiments of the present disclosure, the problem i.e., how the terminal equipment selects resources for performing uplink transmission when a configured grant is of one group or multiple groups, is solved, which ensures successful completion of LTM cell switch and enhances network performance.

### Embodiments of a third aspect

Embodiments of the present disclosure provide an apparatus for transmitting uplink transmission, the apparatus may, for example, be a terminal equipment, or may also be one or more parts or components configured in the terminal equipment. The principle of the apparatus to solve the problem is same as the method in the embodiments of the first aspect, thus its specific implementation may refer to the implementation of the method in the embodiments of the first aspect, the same contents will not be repeated.

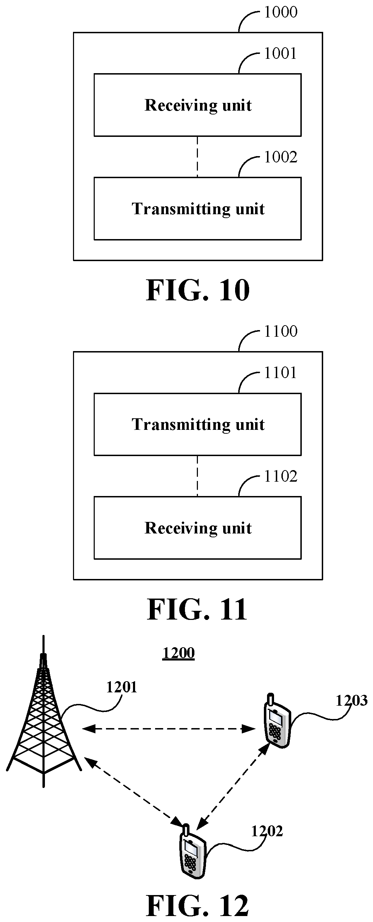

FIG. 10 is a schematic diagram of an apparatus for transmitting uplink transmission in the embodiments of the present disclosure. As shown in FIG. 10, the apparatus 1000 comprises:
a receiving unit 1001 configured to receive a first MAC CE (media access control control element) including candidate configuration information, transmitted by a first DU (distributed unit); and
a transmitting unit 1002 configured to transmit uplink transmission to a cell associated with the candidate configuration information by using an available CG occasion (configured grant occasion) or using a DG (dynamic grant).

In some embodiments, the available CG occasion is associated with at least one of the following:
beam information included in the first MAC CE;
an RO used by the terminal equipment for random access performed for obtaining a TA;
an RS of the beam information included in the first MAC CE;
an RS of the RO;
a specific RS.

In the above embodiments, the beam information may include Unified TCI state information, the Unified TCI state information may include a joint TCI state ID, or an UL TCI state ID and/or DL TCI state ID in a separate TCI state ID. The terminal equipment may transmit the uplink transmission on a beam corresponding to the joint TCI state ID or the UL TCI state ID; and/or, the terminal equipment may receive information on that the uplink transmission has been successfully received on the beam corresponding to the joint TCI state ID or the DL TCI state ID.

In the above embodiments, the beam information may include TCI state information and/or uplink spatial filtering information. The terminal equipment may receive the information on that the uplink transmission has been successfully received on a beam corresponding to the TCI state information; and/or, the terminal equipment may transmit the uplink transmission on a beam associated with the uplink spatial filtering information.

In the above embodiments, that the available CG occasion is associated with an RO used by the terminal equipment for random access performed for obtaining a TA may comprise:
if the first MAC CE does not include beam information, or the CG occasion associated with the beam information included in the first MAC CE is not configured, or the CG occasion associated with the beam information included in the first MAC CE is invalid, the available CG occasion is associated with the RO.

In the above embodiments, the specific RS may be an SSB for receiving SIB1.

In the above embodiments, the specific RS may be an RS indicated in SIB1 or MIB.

In the above embodiments, the RS may include at least one of the following: an SSB, a CSI-RS, an SRS.

In some embodiments, when at least one of the following conditions is satisfied, the terminal equipment considers that the CG occasion is available or there is the available CG occasion:
the CG occasion is configured by RRC signaling;
the first MAC CE is received;
specific DCI is received.

In some implementations, the specific DCI is used to schedule a PDSCH carrying the first MAC CE.

In some implementations, the specific DCI is transmitted or received simultaneously with the first MAC CE, being transmitted or received simultaneously means being transmitted or received in the same slot or symbol or RB.

In some embodiments, the available CG occasion is on an uplink carrier, the uplink carrier referring to at least one of the following:
an NUL (normal uplink) or SUL (supplementary uplink) configured with a CG;
an NUL or SUL configured with a CG used for an LTM procedure;
an NUL or SUL configured with an available CG used for an LTM procedure;
an uplink carrier used by the terminal equipment for random access performed for obtaining a TA (timing advance);
an uplink carrier indicated by the first MAC CE;
an uplink carrier selected based on RSRP of a downlink path loss reference signal.

In the above embodiments, it may be that if an RSRP threshold is configured and if the RSRP of the downlink path loss reference signal is less than the RSRP threshold, the selected uplink carrier is an SUL; otherwise, the selected uplink carrier is an NUL.

In some embodiments, the uplink transmission carries an RRC reconfiguration complete message, or carries a MAC CE for indicating LTM completion.

In some embodiments, the uplink transmission is at least one of initial transmission, repetition of the initial transmission, and retransmission, and is configured by RRC signaling and/or the first MAC CE and/or DCI.

In the above embodiments, if the uplink transmission includes retransmission, the transmitting unit 1002 may further start a retransmission timer after the initial transmission is transmitted and transmit the retransmission in a case where the retransmission timer expires.

In some embodiments, the terminal equipment uses an HARQ process to transmit the uplink transmission;
wherein for CG type 1, a process ID of the HARQ process is calculated using a first calculation formula and a first parameter; for CG type 2, the process ID of the HARQ process is calculated using a second calculation formula and a second parameter; wherein SFNstart time, slotstart time and symbolstart time in the second parameter are respectively an SFN, a slot and a symbol of a first transmission occasion of a PUSCH when or after the CG occasion is available.

In some embodiments, the transmitting unit 1002 determines whether to use the CG occasion to transmit the uplink transmission.

In some embodiments, if a condition for using the CG is satisfied or a condition for using the DG is not satisfied, the transmitting unit 1002 determines to use the CG occasion to transmit the uplink transmission; if the condition for using the DG is satisfied or the condition for using the CG is not satisfied, the transmitting unit 1002 uses the DG to transmit the uplink transmission.

In the above embodiments, the condition for using the CG may include at least one of the following:
the CG is configured;
a configured CG is valid or available;
a time interval related to reception of the first MAC CE satisfies a first predetermined condition.

In the above embodiments, the first predetermined condition may include at least one of the following:
a time interval between reception of the first MAC CE and a next CG occasion is less than a configured offset;
a PDCCH addressed by a C-RNTI is not received after reception of the first MAC CE;
a PDCCH addressed by a C-RNTI is not received between reception of the first MAC CE and next CG occasion.

In the above embodiments, the condition for using the DG may include at least one of the following:
the first DU is a DU associated with the candidate configuration information;
the first DU informs a second DU that the terminal equipment performs LTM;
the first DU informs the second DU of the beam information included in the first MAC CE;
a time interval related to reception of the first MAC CE satisfies a second predetermined condition.

In the above embodiments, the second predetermined condition may include at least one of the following:
a time interval between reception of the first MAC CE and a PDCCH addressed by a next C-RNTI is less than a configured offset;
there is no available CG occasion after reception of the first MAC CE;
there is no available CG occasion between reception of the first MAC CE and reception of a PDCCH addressed by a next C-RNTI.

In some embodiments, the receiving unit 1001 receives information on that the uplink transmission has been successfully received.

In the above embodiments, the information may be one of the following:
RLC ACK for the uplink transmission;
a PDCCH addressed by a C-RNTI;
a UE Contention Resolution Identity MAC CE;
an MAC CE indicating completion of LTM cell switch.

For example, if the CG is used for retransmission, the information may be a PDCCH addressed by a C-RNTI.

For another example, if the DG is used for the initial transmission or retransmission, the information is a PDCCH addressed by a C-RNTI, and the PDCCH schedules new transmission, or the PDCCH schedules new transmission on an HARQ process ID.

In the above embodiments, the PDCCH may be used to schedule one of the RLC ACK of the uplink transmission, the UE Contention Resolution Identity MAC CE, and the MAC CE indicating completion of LTM cell switch. For example, in a case where the information is a PDCCH addressed by a C-RNTI, the PDCCH is used to schedule one of the RLC ACK for the uplink transmission, the UE Contention Resolution Identity MAC CE, and the MAC CE indicating completion of LTM cell switch.

Embodiments of the present disclosure further provide an apparatus for receiving uplink transmission, the apparatus may be a network device, or may further be one or more parts or components configured in the network device. The principle of the apparatus to solve the problem is same as the method in the embodiments of the second aspect, thus for its specific implementation, the implementation of the method in the embodiments of the second aspect may be referred to, the same contents will not be repeated.

FIG. 11 is a schematic diagram of an apparatus for receiving uplink transmission in the embodiments of the present disclosure. As shown in FIG. 11, the apparatus 1100 comprises:
a transmitting unit 1101 configured to transmit a first MAC CE (media access control control element) including candidate configuration information to a terminal equipment, in the source DU; and
a receiving unit 1102 configured to receive uplink transmission transmitted by the terminal equipment to a cell associated with the candidate configuration information by using an available CG occasion (configured grant occasion) or using a DG (dynamic grant), in the candidate or target DU.

In some embodiments, the available CG occasion is associated with at least one of the following:
beam information included in the first MAC CE;
an RO used by the terminal equipment for random access performed for obtaining a TA;
an RS of the beam information included in the first MAC CE;
an RS of the RO;
a specific RS.

In the above embodiments, the beam information may include Unified TCI state information, the Unified TCI state information may include a joint TCI state ID, or an UL TCI state ID and/or DL TCI state ID in a separate TCI state ID. The receiving unit 1102 may receive the uplink transmission transmitted by a terminal equipment on a beam corresponding to the joint TCI state ID or the UL TCI state ID; and/or, the transmitting unit 1101 may transmit information on that the uplink transmission has been successfully received to the terminal equipment on the beam corresponding to the joint TCI state ID or the DL TCI state ID.

In the above embodiments, the beam information may include TCI state information and/or uplink spatial filtering information. The transmitting unit 1101 may transmit the information on that the uplink transmission has been successfully received to the terminal equipment on a beam corresponding to the TCI state information; and/or, the receiving unit 1102 may receive the uplink transmission transmitted by the terminal equipment on a beam associated with the uplink spatial filtering information.

In the above embodiments, that the available CG occasion is associated with an RO used by the terminal equipment for random access performed for obtaining a TA may include:
if the first MAC CE does not include beam information, or the CG occasion associated with the beam information included in the first MAC CE is not configured, or the CG occasion associated with the beam information included in the first MAC CE is invalid, the available CG occasion is associated with the RO.

In the above embodiments, the specific RS may be an SSB for receiving SIB1.

In the above embodiments, the specific RS may be an RS indicated in SIB1 or MIB.

In the above embodiments, the RS may include at least one of the following: an SSB, a CSI-RS, an SRS.

In some embodiments, when at least one of the following conditions is satisfied, the terminal equipment considers that the CG occasion is available or there is the available CG occasion:
the CG occasion is configured by RRC signaling;
the first MAC CE is received;
specific DCI is received.

In some implementations, the specific DCI is used to schedule a PDSCH carrying the first MAC CE.

In some implementations, the specific DCI is transmitted or received simultaneously with the first MAC CE, being transmitted or received simultaneously means being transmitted or received in the same slot or symbol or RB.

In some embodiments, the available CG occasion is on an uplink carrier, the uplink carrier referring to at least one of the following:
an NUL (normal uplink) or SUL (supplementary uplink) configured with a CG;
an NUL or SUL configured with a CG used for an LTM procedure;
an NUL or SUL configured with an available CG used for an LTM procedure;
an uplink carrier used by the terminal equipment for random access performed for obtaining a TA (timing advance);
an uplink carrier indicated by the first MAC CE;
an uplink carrier selected based on RSRP of a downlink path loss reference signal.

In the above embodiments, if an RSRP threshold is configured and if the RSRP of the downlink path loss reference signal is less than the RSRP threshold, the selected uplink carrier is an SUL; otherwise, the selected uplink carrier is an NUL.

In some embodiments, the uplink transmission carries an RRC reconfiguration complete message, or carries a MAC CE for indicating LTM completion.

In some embodiments, the uplink transmission is at least one of initial transmission, repetition of the initial transmission, and retransmission, and is configured by RRC signaling and/or the first MAC CE and/or DCI.

In some embodiments, the receiving unit 1102 receives the uplink transmission transmitted by the terminal equipment by using an HARQ process; wherein for CG type 1, a process ID of the HARQ process is calculated using a first calculation formula and a first parameter; for CG type 2, the process ID of the HARQ process is calculated using a second calculation formula and a second parameter; wherein SFNstart time, slotstart time and symbolstart time in the second parameter are respectively an SFN, a slot and a symbol of a first transmission occasion of a PUSCH when or after the CG occasion is available.

In some embodiments, the transmitting unit 1101 transmits information on that the uplink transmission has been successfully received to the terminal equipment.

In the above embodiments, the information may be one of the following:
RLC ACK for the uplink transmission;
a PDCCH addressed by a C-RNTI;
a UE Contention Resolution Identity MAC CE;
an MAC CE indicating completion of LTM cell switch.

For example, if the CG is used for retransmission, the information is a PDCCH addressed by a C-RNTI.

For another example, if the DG is used for the initial transmission or retransmission, the information is a PDCCH addressed by a C-RNTI, and the PDCCH schedules new transmission, or the PDCCH schedules new transmission on an HARQ process ID.

In the above embodiments, the PDCCH may be used to schedule one of the RLC ACK of the uplink transmission, the UE Contention Resolution Identity MAC CE, and the MAC CE indicating completion of LTM cell switch. For example, in a case where the information is a PDCCH addressed by a C-RNTI, the PDCCH is used to schedule one of the RLC ACK for the uplink transmission, the UE Contention Resolution Identity MAC CE, and the MAC CE indicating completion of LTM cell switch.

In some embodiments, the transmitting unit 1101 transmits a target cell identifier and beam information to the CU in a source DU; the CU transmits the target cell identifier and the beam information to a candidate or target DU.

In the above embodiments, in a case where the CG configuration configured for the terminal equipment does not include a configuration of a cell associated with the candidate configuration information included in the first MAC CE, the transmitting unit 1101 performs the aforementioned processing.

In the above embodiments, the target cell identifier and the beam information transmitted by the transmitting unit 1101 in the source DU are included in a UE CONTEXT MODIFICATION REQUIRED message or in a first F1 message. The first F1 message, for example, is a UE CONTEXT SETUP REQUIRED message.

In the above embodiments, the target cell identifier and the beam information transmitted by the transmitting unit 1101 in the CU are included in a second F1 message. The second F1 message, for example, is a UE CONTEXT SETUP REQUEST message or a UE CONTEXT MODIFICATION REQUEST message.

In the previous embodiments, the beam information may include at least one of the following:
unified TCI state information;
TCI state information;
uplink spatial filtering information.

In the above embodiments, the target cell identifier may include candidate configuration information, or include candidate configuration information and a cell index under the candidate configuration.

The above text is only illustrative for the embodiments of the present disclosure, but the present disclosure is not limited to this, appropriate modifications can be also made based on the above each embodiment. For example, each of the above embodiments may be used individually, or one or more of the above embodiments may be combined.

It's worth noting that the above only describes components or modules related to the present disclosure, but the present disclosure is not limited thereto. The apparatus may further comprise other components or modules. For detailed contents of these components or modules, relevant technologies can be referred to. Moreover, the above components or modules may be realized by a hardware facility such as a processor, a memory, a transmitter, a receiver, etc. The embodiments of the present disclosure have no limitation to this.

According to the apparatus in the embodiments of the present disclosure, successful completion of LTM cell switch is ensured, and network performance is improved.

### Embodiments of a fourth aspect

Embodiments of the present disclosure further provide a communication system, comprising a network device and a terminal equipment.

FIG. 12 is a schematic diagram of a communication system in the embodiments of the present disclosure, schematically describes situations by taking a terminal equipment and a network device as examples, as shown in FIG. 12, a communication system 1200 may include a network device 1201 and terminal equipments 1202, 1203. For simplicity, FIG. 12 only takes two terminal equipments and one network device as examples for description, however the embodiments of the present disclosure are not limited to this.

In the embodiments of the present disclosure, transmission of existing or further implementable services may be carried out between the network device 1201 and the terminal equipments 1202, 1203. For example, these services may include but be not limited to: enhanced Mobile Broadband (eMBB), massive Machine Type Communication (mMTC), Ultra-Reliable and Low-Latency Communication (URLLC) and so on.

It is worth noting that FIG. 12 shows that two terminal equipments 1202 and 1203 are within the coverage of network device 1201, but the present disclosure is not limited to this. The two terminal equipments 1202 and 1203 may be outside the coverage of the network device 1201, or one terminal equipment 1202 may be within the coverage of the network device 1201 and the other terminal equipment 1203 may be outside the coverage of the network device 1201.

In some embodiments, the network device comprises the apparatus 1100 in the embodiments of the third aspect, configured to perform the method in the embodiments of the second aspect. Since the method has been described in details in the embodiments of the second aspect, its contents are incorporated here and are not repeated.

The network device may be a gNB in an intra-DU mobility scenario, including a gNB-DU and a gNB-CU, or a gNB in an inter-DU mobility scenario, including a source gNB-DU, a candidate or target gNB-DU and a gNB-CU, to perform the method in the embodiments of the second aspect.

In some embodiments, the terminal equipment comprises the apparatus 1000 in the embodiments of the third aspect, configured to perform the method in the embodiments of the first aspect. Since the method has been described in details in the embodiments of the first aspect, its contents are incorporated here and are not repeated.

The terminal equipment may be an UE in an intra-DU mobility scenario or an inter-DU mobility scenario, and performs the method in the embodiment of the first aspect.

Embodiments of the present disclosure further provide a network device, the network device for example may be a base station, such as a gNB in an intra-DU mobility scenario or an inter-DU mobility scenario, but the present disclosure is not limited thereto, it may also be other network device.

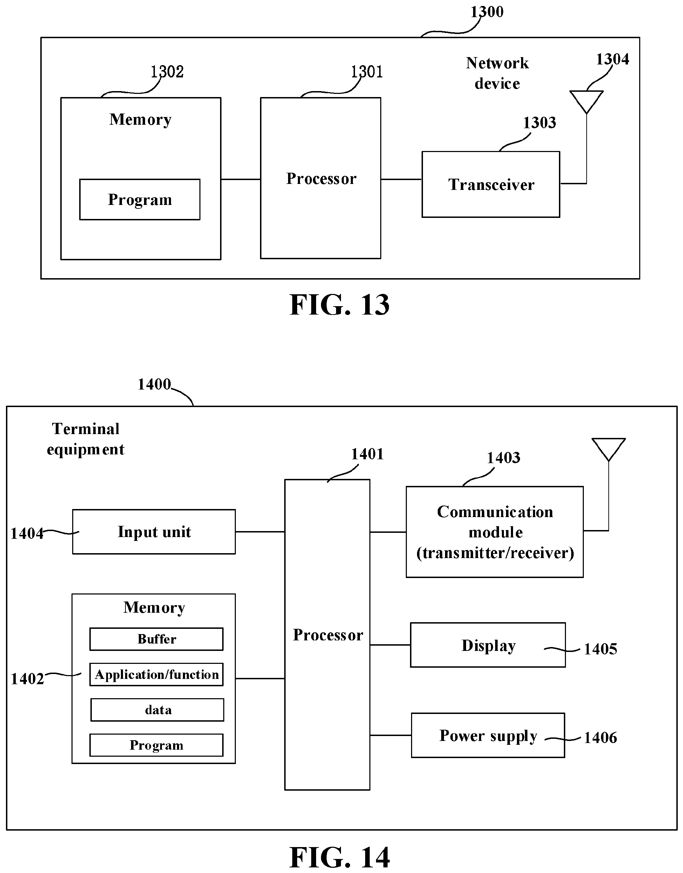

FIG. 13 is a composition schematic diagram of a network device in the embodiments of the present disclosure. As shown in FIG. 13, the network device 1300 may comprise: a processor 1301 and a memory 1302; the memory 1302 is coupled to the processor 1301. The memory 1302 may store various data; moreover, also stores a program for information processing, and executes the program under the control of the processor 1301.

In some embodiments, functions of the apparatus 1100 in the embodiments of the third aspect may be integrated into the processor 1301, wherein the processor 1301 may be configured to execute a program to implement the method as described in the embodiments of the second aspect, the contents of which are incorporated herein and are not described repeatedly here.

In some other embodiments, the apparatus 1100 in the embodiments of the third aspect may be configured separately from the processor 1301, for example the apparatus 1100 in the embodiments of the third aspect may be configured as a chip connected to the processor 1301, functions of the apparatus 1100 in the embodiments of the third aspect are realized through the control of the processor 1301.

In addition, as shown in FIG. 13, the network device 1300 may further comprise: transceivers 1303 and 1304. The functions of said components are similar to related arts, which are not repeated here. It's worth noting that the network device 1300 does not have to include all the components shown in FIG. 13. Moreover, the network device 1300 may also include components not shown in FIG. 13, relevant arts can be referred to.

Embodiments of the present disclosure further provide a terminal equipment, the terminal equipment for example may be a UE, such as a UE in an intra-DU mobility scenario or an inter-DU mobility scenario, but the present disclosure is not limited thereto, it may also be other terminal equipment.

FIG. 14 is a schematic diagram of a terminal equipment in the embodiments of the present disclosure. As shown in FIG. 14, the terminal equipment 1400 may comprise a processor 1401 and a memory 1402; the memory 1402 stores data and programs, and is coupled to the processor 1401. It's worth noting that this figure is exemplary; other types of structures may also be used to supplement or replace this structure, so as to realize a telecommunication function or other functions.

In some embodiments, functions of the apparatus 1000 in the embodiments of the third aspect may be integrated into the processor 1401, wherein the processor 1401 may be configured to execute a program to implement the method as described in the embodiments of the first aspect, the contents of which are incorporated herein and are not described repeatedly here.

In some other embodiments, the apparatus 1000 in the embodiments of the third aspect may be configured separately from the processor 1401, for example the apparatus 1000 in the embodiments of the third aspect may be configured as a chip connected to the processor 1401, functions of the apparatus 1000 in the embodiments of the third aspect are implemented through the control of the processor 1401.

As shown in FIG. 14, the terminal equipment 1400 may further comprise: a communication module 1403, an input unit 1404, a display 1405 and a power supply 1406. The functions of said components are similar to related arts, which are not repeated here. It's worth noting that the terminal equipment 1400 does not have to include all the components shown in FIG. 14, the components are not indispensable. Moreover, the terminal equipment 1400 may also include components not shown in FIG. 14, relevant technologies can be referred to.

Embodiments of the present disclosure further provide a computer program, wherein when a network device executes the program, the program enables the network device to execute the method described in the embodiments of the second aspect.

Embodiments of the present disclosure further provide a storage medium in which a computer program is stored, wherein the computer program enables a network device to execute the method described in the embodiments of the second aspect.

Embodiments of the present disclosure further provide a computer program, wherein when a terminal equipment executes the program, the program enables the terminal equipment to execute the method described in the embodiments of the first aspect.

Embodiments of the present disclosure further provide a storage medium in which a computer program is stored, wherein the computer program enables a terminal equipment to execute the method described in the embodiments of the first aspect.

The apparatus and method in the present disclosure may be realized by hardware, or may be realized by combining hardware with software. The present disclosure relates to such a computer readable program, when the program is executed by a logic component, the computer readable program enables the logic component to realize the device described in the above text or a constituent component, or enables the logic component to realize various methods or steps described in the above text. The present disclosure further relates to a storage medium storing the program, such as a hard disk, a magnetic disk, an optical disk, a DVD, a flash memory and the like.

By combining with the method/device described in the embodiments of the present disclosure, it may be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules may be realized by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module may be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module may be stored in the MEGA-SIM card or the flash memory apparatus with a large capacity.

One or more in the functional block diagram or one or more combinations in the functional block diagram as described in the drawings may be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings may further be implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art may make various variations and modifications to the present disclosure according to the spirit and principle of the present disclosure, these variations and modifications are also within the scope of the present disclosure.

As for the implementations including the above embodiments, the following supplements are further disclosed:
1. A method for transmitting uplink transmission, wherein the method comprises:
   a terminal equipment receives a first MAC CE (media access control control element) including candidate configuration information, transmitted by a first DU (distributed unit); and
   the terminal equipment transmits uplink transmission to a cell associated with the candidate configuration information by using an available CG occasion (configured grant occasion) or using a DG (dynamic grant).
2. The method according to supplement 1, wherein the available CG occasion is associated with at least one of the following:
   beam information included in the first MAC CE;
   an RO used by the terminal equipment for random access performed for obtaining a TA;
   an RS of the beam information included in the first MAC CE;
   an RS of the RO;
   a specific RS.
3. The method according to supplement 2, wherein,
   the beam information includes Unified TCI state information.
3a. The method according to supplement 3, wherein,
   the Unified TCI state information includes a joint TCI state ID, or an UL TCI state ID and/or DL TCI state ID in a separate TCI state ID.
4. The method according to Supplement 3a, wherein,
   the terminal equipment transmits the uplink transmission on a beam corresponding to the joint TCI state ID or the UL TCI state ID; and/or,
   the terminal equipment receives information on that the uplink transmission has been successfully received on a beam corresponding to the joint TCI state ID or the DL TCI state ID.
5. The method according to supplement 2, wherein,
   the beam information includes TCI state information and/or uplink spatial filtering information.
6. The method according to supplement 5, wherein,
   the terminal equipment receives the information on that the uplink transmission has been successfully received on a beam corresponding to the TCI state information; and/or,
   the terminal equipment transmits the uplink transmission on a beam associated with the uplink spatial filtering information.
7. The method according to supplement 2, wherein that the available CG occasion is associated with an RO used by the terminal equipment for random access performed for obtaining a TA includes:
   if the first MAC CE does not include beam information, or the CG occasion associated with the beam information included in the first MAC CE is not configured, or the CG occasion associated with the beam information included in the first MAC CE is invalid, the available CG occasion is associated with the RO.
8. The method according to supplement 2, wherein,
   the specific RS is a SSB for receiving SIB1.
9. The method according to Supplement 2, wherein,
   the specific RS is an RS indicated in SIB1 or MIB.
10. The method according to supplement 2 or 9, wherein,
   the RS includes at least one of the following: an SSB, a CSI-RS, an SRS.
11. The method according to Supplement 1, wherein when at least one of the following conditions is satisfied, the terminal equipment considers that the CG occasion is available or there is the available CG occasion:
   the CG occasion is configured by RRC signaling;
   the first MAC CE is received;
   specific DCI is received.
12. The method according to supplement 11, wherein,
   the specific DCI is used to schedule a PDSCH carrying the first MAC CE; and/or
   the specific DCI is transmitted or received simultaneously with the first MAC CE, being transmitted or received simultaneously means being transmitted or received in the same slot or symbol or RB.
13. The method according to any one of supplements 1 to 12, wherein the available CG occasion is on an uplink carrier, the uplink carrier referring to at least one of the following:
   an NUL (normal uplink) or SUL (supplementary uplink) configured with a CG;
   an NUL or SUL configured with a CG used for an LTM procedure;
   an NUL or SUL configured with an available CG used for an LTM procedure;
   an uplink carrier used by the terminal equipment for random access performed for obtaining a TA (timing advance);
   an uplink carrier indicated by the first MAC CE;
   an uplink carrier selected based on RSRP of a downlink path loss reference signal.
14. The method according to supplement 13, wherein,
   if an RSRP threshold is configured and if the RSRP of the downlink path loss reference signal is less than the RSRP threshold, the selected uplink carrier is an SUL; otherwise, the selected uplink carrier is an NUL.
15. The method according to any one of supplements 1-14, wherein,
   the uplink transmission carries an RRC reconfiguration complete message, or carries a MAC CE for indicating LTM completion.
16. The method according to any one of supplements 1-15, wherein,
   the uplink transmission is at least one of initial transmission, repetition of the initial transmission, and retransmission.
16a. The method according to supplement 16, wherein,
   at least one of the initial transmission, repetition of the initial transmission, and retransmission is configured by RRC signaling and/or the first MAC CE and/or DCI.
17. The method according to supplement 16, wherein if the uplink transmission includes retransmission, the method further includes:
   the terminal equipment starts a retransmission timer after the initial transmission is transmitted and transmits the retransmission in a case where the retransmission timer expires.
18. The method according to any one of supplements 1-17, wherein,
   the terminal equipment uses an HARQ process to transmit the uplink transmission;
   wherein for CG type 1, a process ID of the HARQ process is calculated using a first calculation formula and a first parameter; for CG type 2, the process ID of the HARQ process is calculated using a second calculation formula and a second parameter;
   wherein SFNstart time, slotstart time and symbolstart time in the second parameter are respectively an SFN, a slot and a symbol of a first transmission occasion of a PUSCH when or after the CG occasion is available.
19. The method according to any one of supplements 1 to 18, wherein the method further includes:
   the terminal equipment determines whether to use the CG occasion to transmit the uplink transmission.
20. The method according to any one of supplements 1-19, wherein,
   if a condition for using the CG is satisfied or a condition for using the DG is not satisfied, the terminal equipment determines to use the CG occasion to transmit the uplink transmission;
   if a condition for using the DG is satisfied or a condition for using the CG is not satisfied, the terminal equipment uses the DG to transmit the uplink transmission.
21. The method according to supplement 20, wherein the condition for using the CG includes at least one of the following:
   the CG is configured;
   a configured CG is valid or available;
   a time interval related to reception of the first MAC CE satisfies a first predetermined condition.
22. The method according to supplement 21, wherein the first predetermined condition includes at least one of the following:
   a time interval between reception of the first MAC CE and a next CG occasion is less than a configured offset;
   a PDCCH addressed by a C-RNTI is not received after reception of the first MAC CE;
   a PDCCH addressed by a C-RNTI is not received between reception of the first MAC CE and next CG occasion.
23. The method according to supplement 20, wherein the condition for using the DG includes at least one of the following:
   the first DU is a DU associated with the candidate configuration information;
   the first DU informs a second DU that the terminal equipment performs LTM;
   the first DU informs the second DU of the beam information included in the first MAC CE;
   a time interval related to reception of the first MAC CE satisfies a second predetermined condition.
24. The method according to Supplement 23, wherein the second predetermined condition includes at least one of the following:
   a time interval between reception of the first MAC CE and a PDCCH addressed by a next C-RNTI is less than a configured offset;
   there is no available CG occasion after reception of the first MAC CE;
   there is no available CG occasion between reception of the first MAC CE and reception of a PDCCH addressed by a next C-RNTI.
25. The method according to any one of Supplements 1 to 24, wherein the method further includes:
   the terminal equipment receives information on that the uplink transmission has been successfully received.
26. The method according to supplement 25, wherein the information is one of the following:
   RLC ACK for the uplink transmission;
   a PDCCH addressed by a C-RNTI;
   a UE Contention Resolution Identity MAC CE;
   an MAC CE indicating completion of LTM cell switch.
27. The method according to supplement 26, wherein,
   in a case where the information is a PDCCH addressed by a C-RNTI, the PDCCH is used to schedule one of the RLC ACK for the uplink transmission, the UE Contention Resolution Identity MAC CE, and the MAC CE indicating completion of LTM cell switch.
28. The method according to supplement 26, wherein,
   if the CG is used for retransmission, the information is a PDCCH addressed by a C-RNTI.
29. The method according to supplement 26, wherein,
   if the DG is used for the initial transmission or retransmission, the information is a PDCCH addressed by a C-RNTI, and the PDCCH schedules new transmission, or the PDCCH schedules new transmission on an HARQ process ID.
30. A method for receiving uplink transmission, wherein the method includes:
   a source DU of a network device transmits a first MAC CE (media access control control element) including candidate configuration information to a terminal equipment; and
   a candidate or target DU of the network device receives uplink transmission transmitted by the terminal equipment to a cell associated with the candidate configuration information by using an available CG occasion (configured grant occasion) or using a DG (dynamic grant).
31. The method according to supplement 30, wherein the available CG occasion is associated with at least one of the following:
   beam information included in the first MAC CE;
   an RO used by the terminal equipment for random access performed for obtaining a TA;
   an RS of the beam information included in the first MAC CE;
   an RS of the RO;
   a specific RS.
32. The method according to supplement 31, wherein,
   the beam information includes Unified TCI state information.
32a. The method according to supplement 32, wherein,
   the Unified TCI state information includes a joint TCI state ID, or an UL TCI state ID and/or DL TCI state ID in a separate TCI state ID.
33. The method according to Supplement 32a, wherein,
   the candidate or target DU of the network device receives the uplink transmission transmitted by the terminal equipment on a beam corresponding to the joint TCI state ID or the UL TCI state ID; and/or,
   the candidate or target DU of the network device transmits the information on that the uplink transmission has been successfully received to the terminal equipment on a beam corresponding to the joint TCI state ID or the DL TCI state ID.
34. The method according to supplement 31, wherein,
   the beam information includes TCI state information and/or uplink spatial filtering information.
35. The method according to supplement 34, wherein,
   the candidate or target DU of the network device receives the uplink transmission transmitted by the terminal equipment on a beam associated with the uplink spatial filtering information; and/or,
   the candidate or target DU of the network device transmits the information on that the uplink transmission has been successfully received to the terminal equipment on a beam corresponding to the TCI state information.
36. The method according to supplement 31, wherein that the available CG occasion is associated with an RO used by the terminal equipment for random access performed for obtaining a TA includes:
   if the first MAC CE does not include beam information, or the CG occasion associated with the beam information included in the first MAC CE is not configured, or the CG occasion associated with the beam information included in the first MAC CE is invalid, the available CG occasion is associated with the RO.
37. The method according to supplement 31, wherein,
   the specific RS is a SSB for receiving SIB1.
38. The method according to supplement 31, wherein,
   the specific RS is an RS indicated in SIB1 or MIB.
39. The method according to supplement 31 or 38, wherein,
   the RS includes at least one of the following: an SSB, a CSI-RS, an SRS.
40. The method according to Supplement 30, wherein when at least one of the following conditions is satisfied, the terminal equipment considers that the CG occasion is available or there is the available CG occasion:
   the CG occasion is configured by RRC signaling;
   the first MAC CE is received;
   specific DCI is received.
41. The method according to supplement 40, wherein,
   the specific DCI is used to schedule a PDSCH carrying the first MAC CE; and/or
   the specific DCI is transmitted or received simultaneously with the first MAC CE, being transmitted or received simultaneously means being transmitted or received in the same slot or symbol or RB.
42. The method according to any one of supplements 30 to 41, wherein the available CG occasion is on an uplink carrier, the uplink carrier referring to at least one of the following:
   an NUL (normal uplink) or SUL (supplementary uplink) configured with a CG;
   an NUL or SUL configured with a CG used for an LTM procedure;
   an NUL or SUL configured with an available CG used for an LTM procedure;
   an uplink carrier used by the terminal equipment for random access performed for obtaining a TA (timing advance);
   an uplink carrier indicated by the first MAC CE;
   an uplink carrier selected based on RSRP of a downlink path loss reference signal.
43. The method according to supplement 42, wherein,
   if an RSRP threshold is configured and if the RSRP of the downlink path loss reference signal is less than the RSRP threshold, the selected uplink carrier is an SUL; otherwise, the selected uplink carrier is an NUL.
44. The method according to any one of supplements 30-43, wherein,
   the uplink transmission carries an RRC reconfiguration complete message, or carries a MAC CE for indicating LTM completion.
45. The method according to any one of supplements 30-43, wherein,
   the uplink transmission is at least one of initial transmission, repetition of the initial transmission, and retransmission, and is configured by RRC signaling and/or the first MAC CE and/or DCI.
46. The method according to any one of supplements 30-45, wherein,
   the candidate or target DU of the network device receives the uplink transmission transmitted by the terminal equipment using an HARQ process;
   wherein for CG type 1, a process ID of the HARQ process is calculated using a first calculation formula and a first parameter; for CG type 2, the process ID of the HARQ process is calculated using a second calculation formula and a second parameter;
   wherein SFNstart time, slotstart time and symbolstart time in the second parameter are respectively an SFN, a slot and a symbol of a first transmission occasion of a PUSCH when or after the CG occasion is available.
47. The method according to supplement 33 or 35, wherein,
   the information on that the uplink transmission has been successfully received is one of the following:
   RLC ACK for the uplink transmission;
   a PDCCH addressed by a C-RNTI;
   a UE Contention Resolution Identity MAC CE;
   an MAC CE indicating completion of LTM cell switch.
48. The method according to supplement 47, wherein,
   in a case where the information is a PDCCH addressed by a C-RNTI, the PDCCH is used to schedule one of the RLC ACK for the uplink transmission, the UE Contention Resolution Identity MAC CE, and the MAC CE indicating completion of LTM cell switch.
49. The method according to supplement 47, wherein,
   if the CG is used for retransmission, the information is a PDCCH addressed by a C-RNTI.
50. The method according to supplement 47, wherein,
   if the DG is used for the initial transmission or retransmission, the information is a PDCCH addressed by a C-RNTI, and the PDCCH schedules new transmission, or the PDCCH schedules new transmission on an HARQ process ID.
51. The method according to any one of Supplements 30 to 50, wherein the method further includes:
   a source DU of the network device transmits a target cell identifier and beam information to the CU of the network device; and
   the CU of the network device transmits the target cell identifier and the beam information to the candidate or target DU of the network device.
51a. The method according to supplement 51, wherein,
   the CG configuration configured for the terminal equipment does not include a configuration of a cell associated with the candidate configuration information included in the first MAC CE.
52. The method according to supplement 51, wherein,
   the target cell identifier and the beam information transmitted by the source DU of the network device are included in a UE CONTEXT MODIFICATION REQUIRED message or in a first F1 message.
53. The method according to supplement 52, wherein,
   the first F1 message is a UE CONTEXT SETUP REQUIRED message.
54. The method according to Supplement 51, wherein,
   the target cell identifier and the beam information transmitted by the CU of the network device are included in a second F1 message.
55. The method according to supplement 54, wherein,
   the second F1 message is a UE CONTEXT SETUP REQUEST message or a UE CONTEXT MODIFICATION REQUEST message.
56. The method according to any one of supplements 51-55, wherein,
   the beam information includes at least one of the following:
   unified TCI state information;
   TCI state information;
   uplink spatial filtering information.
57. The method according to any one of supplements 51-55, wherein,
   the target cell identifier includes candidate configuration information, or includes candidate configuration information and a cell index under the candidate configuration.
58. A terminal equipment, comprising a memory and a processor, the memory storing a computer program, and the processor being configured to execute the computer program to implement the method according to any one of Supplements 1 to 29.
59. A network device, comprising a memory and a processor, the memory storing a computer program, and the processor being configured to execute the computer program to implement the method according to any one of Supplements 30 to 57.
60. A communication system, comprising the network device according to supplement 59 and/or the terminal equipment according to supplement 58.

## Claims

1. An apparatus for transmitting uplink transmission, configured in a terminal equipment, wherein the apparatus comprises:
a receiving unit configured to receive a first MAC CE (media access control control element) including candidate configuration information, transmitted by a first DU (distributed unit); and
a transmitting unit configured to transmit uplink transmission to a cell associated with the candidate configuration information by using an available CG occasion (configured grant occasion) or using a DG (dynamic grant).

2. The apparatus according to claim 1, wherein the available CG occasion is associated with at least one of the following:
beam information included in the first MAC CE;
an RO used by the terminal equipment for random access performed for obtaining a TA;
an RS of the beam information included in the first MAC CE;
an RS of the RO;
a specific RS.

3. The apparatus according to claim 2, wherein,
the specific RS is an SSB for receiving SIB1.

4. The apparatus according to claim 1, wherein when at least one of the following conditions is satisfied, the terminal equipment considers that the CG occasion is available or there is the available CG occasion:
the CG occasion is configured by RRC signaling;
the first MAC CE is received;
specific DCI is received.

5. The apparatus according to claim 4, wherein,
the specific DCI is used to schedule a PDSCH carrying the first MAC CE; and/or
the specific DCI is transmitted or received simultaneously with the first MAC CE, being transmitted or received simultaneously means being transmitted or received in the same slot or symbol or RB.

6. The apparatus according to claim 1, wherein the available CG occasion is on an uplink carrier, the uplink carrier referring to at least one of the following:
an NUL (normal uplink) or SUL (supplementary uplink) configured with a CG;
an NUL or SUL configured with a CG used for an LTM procedure;
an NUL or SUL configured with an available CG used for an LTM procedure;
an uplink carrier used by the terminal equipment for random access performed for obtaining a TA (timing advance);
an uplink carrier indicated by the first MAC CE;
an uplink carrier selected based on RSRP of a downlink path loss reference signal.

7. The apparatus according to claim 1, wherein,
the uplink transmission is at least one of initial transmission, repetition of the initial transmission, and retransmission.

8. The apparatus according to claim 7, wherein,
if the uplink transmission includes retransmission, the transmitting unit starts a retransmission timer after the initial transmission is transmitted and transmits the retransmission in a case where the retransmission timer expires.

9. The apparatus according to claim 1, wherein,
the transmitting unit determines whether to use the CG occasion to transmit the uplink transmission.

10. The apparatus according to claim 1, wherein,
the receiving unit receives information on that the uplink transmission has been successfully received.

11. The apparatus according to claim 10, wherein the information is one of the following:
RLC ACK for the uplink transmission;
a PDCCH addressed by a C-RNTI;
a UE Contention Resolution Identity MAC CE;
an MAC CE indicating completion of LTM cell switch.

12. The apparatus according to claim 11, wherein,
in a case where the information is a PDCCH addressed by a C-RNTI, the PDCCH is used to schedule one of the RLC ACK for the uplink transmission, the UE Contention Resolution Identity MAC CE, and the MAC CE indicating completion of LTM cell switch.

13. The apparatus according to claim 11, wherein,
if the DG is used for the initial transmission or retransmission, the information is a PDCCH addressed by a C-RNTI, and the PDCCH schedules new transmission, or the PDCCH schedules new transmission on an HARQ process ID.

14. An apparatus for receiving uplink transmission, configured in a network device, the network device comprising a source DU, a candidate or target DU and a CU, wherein the apparatus comprises:
a transmitting unit configured to transmit a first MAC CE (media access control control element) including candidate configuration information to a terminal equipment, in the source DU; and
a receiving unit configured to receive uplink transmission transmitted by the terminal equipment to a cell associated with the candidate configuration information by using an available CG occasion (configured grant occasion) or using a DG (dynamic grant), in the candidate or target DU.

15. The apparatus according to claim 14, wherein,
the transmitting unit transmits a target cell identifier and beam information to the CU of the network device, in the source DU; and
the transmitting unit transmits the target cell identifier and the beam information to the candidate or target DU, in the CU.

16. The apparatus according to claim 15, wherein,
the target cell identifier and the beam information transmitted by the transmitting unit in the source DU are included in a UE CONTEXT MODIFICATION REQUIRED message or in a first F1 message.

17. The apparatus according to claim 16, wherein,
the first F1 message is a UE CONTEXT SETUP REQUIRED message.

18. The apparatus according to claim 15, wherein,
the target cell identifier and the beam information transmitted by the transmitting unit in the CU are included in a second F1 message.

19. The apparatus according to claim 18, wherein,
the second F1 message is a UE CONTEXT SETUP REQUEST message or a UE CONTEXT MODIFICATION REQUEST message.

20. The apparatus according to claim 15, wherein,
the target cell identifier includes candidate configuration information, or includes candidate configuration information and a cell index under the candidate configuration.
